# EUROPEAN PATENT APPLICATION

(11) **EP 4 498 748 A1**
(43) Date of publication of application: **29.01.2025**
(21) Application number: 23774897.5
(22) Date of filing: 20.03.2023
(51) Int. Cl.: H04W 72/0446, H04B 1/56, H04J 1/00, H04W 84/06

(54) **COMMUNICATION DEVICE, BASE STATION, TERMINAL, AND COMMUNICATION METHOD**

(30) Priority: 22.03.2022 JP 2022045112
(71) Applicant: NTT DOCOMO, INC., Tokyo 100-6150 (JP)
(72) Inventor: HOKAZONO, Yuki, Tokyo 100-6150 (JP); KISHIYAMA, Yoshihisa, Tokyo 100-6150 (JP); KOHARA, Hinata, Tokyo 100-6150 (JP)
(74) Representative: Hoffmann Eitle
(86) International application number: PCT/JP2023/010979
(87) International publication number: WO 2023/182302

(57) **Abstract**

A communication apparatus includes: a communication unit configured to perform communication with a terrestrial apparatus by FD (Full Duplex) in a service link or a feeder link of a non-terrestrial network; and a control unit configured to remove a self-interference that is an interference to a reception signal by a transmission signal.

## Description

### Technical Field

The present invention relates to a communication system in a non-terrestrial network.

### Background Art

In 3GPP (registered trademark) (Third Generation Partnership Project) which is a standardization project, for NR (New Radio) (also referred to as "5G") which is a successor system of LTE (Long Term Evolution), a technical specification of a technology that satisfies a large capacity system, a high data transmission rate, low delay, simultaneous connection of a large number of terminals, low cost, power saving, and the like is studied and created (for example, Non-Patent Document 1).

In recent years, a technique has been studied that enables coverage of areas such as mountainous areas, remote areas, and areas on the sea by non-terrestrial networks (NTN) using HAPS (high altitude platform stations or high altitude pseudo satellites).

### Prior Art Document

### Non-Patent Document

Non-Patent Document 1: 3GPP TS 38.331 V16.6.0 (2021-09)

### SUMMARY OF THE INVENTION

### Problems to be Solved by the Invention

In the related art, frequency division duplex (FDD) is adopted as a duplex scheme of the NTN system in consideration of propagation delay. In addition, in NR which is a terrestrial NW system, as a duplex scheme, TDD (Time Division Duplex) is mainly used for bidirectional communication of uplink and downlink.

For FDD, there is an advantage of low delay, but it is necessary to reserve a pair of uplink and downlink frequencies. Further, TDD has an advantage that frequency resources can be effectively utilized without the need to reserve frequency pairs, but a delay involved in switching between uplink and downlink increases.

The present invention has been made in view of the above points, and an object of the present invention is to provide a technique that enables an NTN system to enjoy both the advantage of FDD and the advantage of TDD. Means for Solving the Problems

According to the disclosed technique, there is provided a communication apparatus including:
a communication unit configured to perform communication with a terrestrial apparatus by FD (Full Duplex) in a service link or a feeder link of a non-terrestrial network; and
a control unit configured to remove a self-interference that is an interference to a reception signal by a transmission signal. Effects of the Invention

According to the disclosed technique, a technique is provided that enables an NTN system to enjoy both the advantage of FDD and the advantage of TDD.

### Brief Description of the Drawings

[Fig. 1] FIG. 1 is a first diagram for explaining a non-terrestrial network;
[Fig. 2] FIG. 2 is a second diagram for explaining a non-terrestrial network;
[Fig. 3] FIG. 3 is a diagram for explaining a retransmission type;
[Fig. 4] FIG. 4 is a diagram for explaining a regenerative type;
[FIG. 5] FIG. 5 is a diagram for explaining a duplex scheme in NTN;
[Fig. 6] FIG. 6 is a diagram for explaining a duplex scheme in a terrestrial NW;
[Fig. 7] FIG. 7 is a diagram for explaining FD (Full Duplex);
[Fig. 8] FIG. 8 is a diagram for explaining FD (Full Duplex);
[Fig. 9] FIG. 9 is a diagram showing an example of interference;
[Fig. 10] FIG. 10 is a configuration diagram of a communication system according to an embodiment of the present invention;
[Fig. 11] FIG. 11 is a diagram for explaining bidirectional FD;
[Fig. 12] FIG. 12 is a diagram for explaining bidirectional FD;
[Fig. 13] FIG. 13 is a diagram for explaining NTN apparatus side FD;
[Fig. 14] FIG. 14 is a diagram for explaining NTN apparatus side FD;
[Fig. 15] FIG. 15 is a diagram showing an example of a self-interference canceller;
[Fig. 16] FIG. 16 is a diagram showing an example of power suppression;
[Fig. 17] FIG. 17 is a diagram showing an example of power suppression;
[Fig. 18] FIG. 18 is a diagram showing an example in which an NTN terrestrial station also operates as a terrestrial base station;
[Fig. 19] FIG. 19 is a diagram for explaining an example of an operation sequence using capability information;
[Fig. 20] FIG. 20 is a diagram for explaining an example of an operation sequence using capability information;
[Fig. 21] FIG. 21 is a diagram showing an example of a functional configuration of a communication apparatus according to an embodiment of the present invention;
[Fig. 22] FIG. 22 is a diagram showing an example of a functional configuration of a terminal in the embodiment of the present invention;
[Fig. 23] FIG. 23 is a diagram showing an example of a functional configuration of a base station according to an embodiment of the present invention;
[Fig. 24] FIG. 24 is a diagram showing an example of a hardware configuration of a communication apparatus, a base station, or a terminal according to an embodiment of the present invention; and
[Fig. 25] FIG. 25 is a diagram showing an example of a configuration of a vehicle in an embodiment of the present invention.

### Detailed Description of the Invention

Hereinafter, an embodiment of the present invention will be described with reference to the drawings. The embodiment described below is an example, and the embodiment to which the present invention is applied is not limited to the following embodiment.

A known technique may be used as appropriate for the radio communication system according to the embodiment of the present disclosure. The known technique may be, for example, 5G or Beyond 5G. The technique of the present disclosure can be applied to any radio communication system, not limited to 5G or the like.

In the embodiment of the present invention, a parameter or the like being "configured" may mean that a predetermined value is pre-configured or that a parameter is configured from a certain apparatus to another apparatus.

### (About Non-Terrestrial Network)

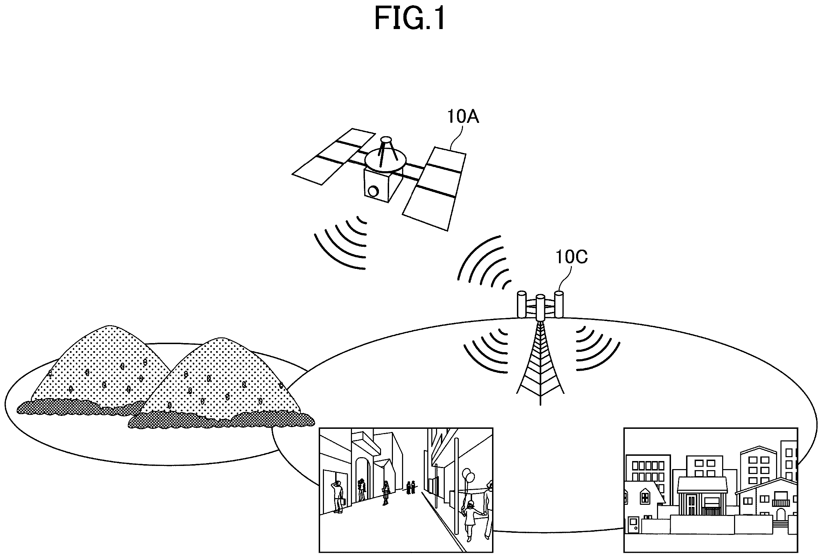

FIG. 1 is a first diagram for explaining a non-terrestrial network (NTN). The non-terrestrial network uses non-terrestrial devices, such as satellites, to provide services in areas that are not covered by terrestrial networks, primarily for cost reasons. Further, NTN can provide a more reliable service. For example, NTN is assumed to be applied to IoT (Inter of Things), ships, buses, trains, and critical communications. Also, NTN has scalability by efficient multicast or broadcast.

As an example of NTN, as shown in FIG. 1, a satellite 10A can retransmit signals transmitted from a base station 10C to serve areas where no base station is located, such as, for example, mountainous regions.

The terrestrial network (for example, a terrestrial 5G network) may have a configuration described below. The terrestrial network includes one or more base stations 10E and a terminal 20. The base station 10E is a communication apparatus that provides one or more cells (service areas) and performs radio communication with the terminal 20. The physical resource of the radio signal is defined in a time domain and a frequency domain, and the time domain may be defined by the number of OFDM symbols, and the frequency domain may be defined by the number of subcarriers or the number of resource blocks. The base station 10E transmits a synchronization signal and system information to the terminal 20. The synchronization signal is, for example, NR-PSS and the NR-SSS. The system information is transmitted by, for example, NR-PBCH and is also referred to as broadcast information.

The base station 10E transmits a control signal or data to the terminal 20 in downlink (DL) and receives a control signal or data from the terminal 20 in uplink (UL). Both the base station 10E and the terminal 20 can transmit and receive signals by performing beam forming. In addition, both the base station 10E and the terminal 20 can apply communication by MIMO (Multiple Input Multiple Output) to DL or UL. In addition, both the base station 10E and the terminal 20 may perform communication via a secondary cell (SCell) and a primary cell (PCell) by carrier aggregation (CA). A base station in a terrestrial network may be referred to as a terrestrial base station.

The terminal 20 is a communication apparatus having a radio communication function, such as a smartphone, a mobile phone, a tablet, a wearable terminal, and a machine-to-machine (M2M) communication module. The terminal 20 receives control signals or data from the base station 10E in DL and transmits control signals or data to the base station 10E in UL, thereby using various communication services provided by the radio communication system.

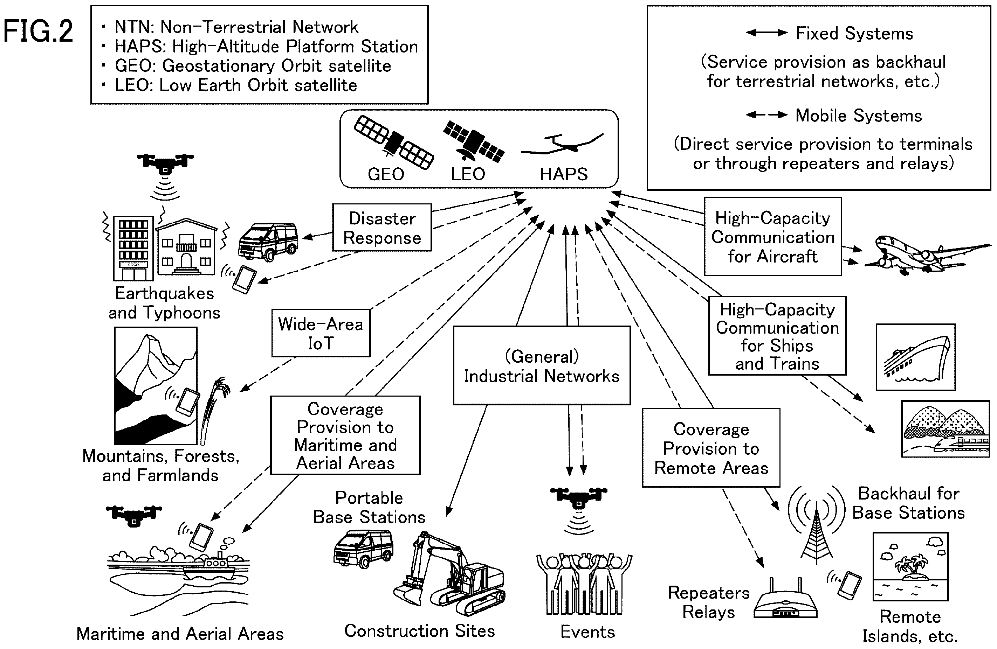

FIG. 2 is a second diagram for explaining a non-terrestrial network (NTN). As shown in FIG. 2, the NTN enables various services to be provided to an area that cannot be covered by a conventional mobile communication network (terrestrial NW).

In particular, it may be more economical to realize planar deployment (area coverage rate of 100%) of millimeter waves by a combination of the NTN and the terrestrial NW than to realize planar deployment by only the terrestrial NW.

As shown in FIG. 2, the NTN is realized by a satellite in space or a flying object in the air. For example, the GEO-satellite may be a satellite located at an altitude of 35,786km and having a geosynchronous orbit. For example, the LEO-satellite may be a satellite located at an altitude of 500 to 2000km and orbiting at a cycle of 88 to 127 minutes. For example, the HAPS may be a flying object that is located at an altitude of 8-50km and performs a turning flight, or may be a flying object that performs another flight.

A relay device (repeater, relay station) or a base station is mounted on a satellite or on a flying object, and a beam is formed by the relay device or the base station to perform communication with an apparatus on the ground. An area formed on the ground by a beam of a satellite or a flying object in the NTN may be referred to as a "service area" or a "beam area". An object, that is not on the ground, that forms the NTN, such as a satellite or a flying object, may be referred to as a non-terrestrial object. A terrestrial apparatus need not be on the surface of the ground, and may be, for example, an apparatus in a building, an apparatus in an airplane, or the like.

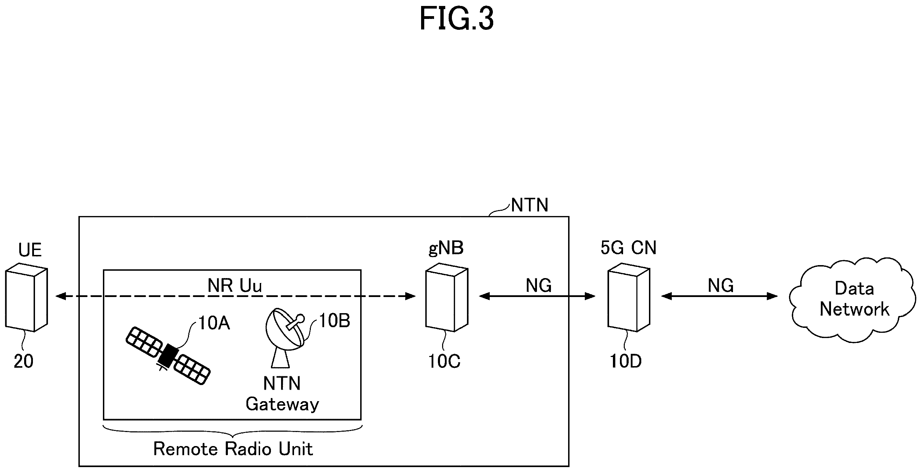

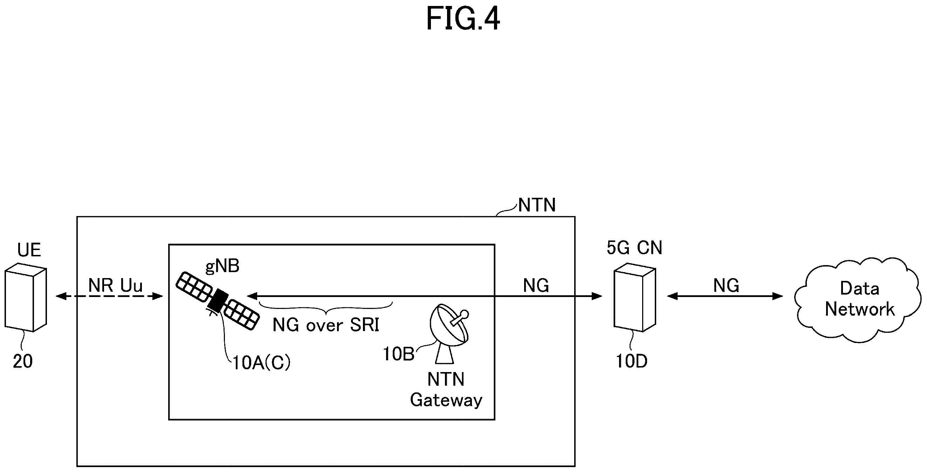

Hereinafter, a configuration example of an existing NTN will be described with reference to FIGs. 3 and 4. Both FIGs. 3 and 4 show a case where the non-terrestrial object is a satellite as an example. Further, FIGs. 3 and 4 show NTN based on NR (5G). The configurations shown in FIGS. 3 and 4 are examples, and the NTN to which the technology of the present invention is applicable is not limited to the configurations shown in FIGs 3 and 4.

The NTN according to the present embodiment can also have the same configuration as the configuration shown in FIGs 3 and 4. However, as described later, in the NTN according to the present embodiment, FD (Full Duplex) is used as a duplex system between the flying object and the ground. The use of FD for NTN is a technique that has not been available in the past.

### <Example of Retransmission Type (Transparent)>

FIG. 3 shows an example of a transparent type NTN in which a non-terrestrial object 10A has a relay apparatus. In the example of FIG. 3, the NTN includes a base station 10C mounted on the ground, an NTN gateway (GW) 10B mounted on the ground, and a non-terrestrial object 10A.

In the example of FIG. 3, data transmitted from the core network (CN) 10D to the terminal 20 is first transmitted from the core network 10 to the base station 10C. Then, the base station 10C transmits the received data to the non-terrestrial object 10A via the NTN gateway 10A by using a downlink radio signal. Then, the non-terrestrial 10A relays (transfers) the received downlink radio signal to the terminal 20 by the relay device.

Further, data transmitted from the terminal 20 to the core network 10D is first transmitted from the terminal 20 to the non-terrestrial object 10A by an uplink radio signal. Then, the non-terrestrial object 10A relays (transfers) the received uplink radio signal to the NTN gateway 10B by the relay device. Then, the NTN gateway 10B transmits the received uplink radio signal to the base station 10C by radio or by wire. The base station 10C then transmits the received data from the NTN gateway 10B to the core network 10D.

### <Example of Regenerative Type>

FIG. 4 shows an example of a regenerative NTN in which the non-terrestrial object 10A includes a base station 10C. In the example of FIG. 4, the NTN includes an NTN gateway 10B located on the ground and the non-ground-based object 10A that includes the base-station 10C.

In the example of FIG. 4, data transmitted from the core network 10D to the terminal 20 is first transmitted from the core network 10D to the base station 10C of the non-terrestrial object 10A by a radio wave (radio signal) by the NTN gateway 10B. The base station 10C of the non-terrestrial object 10C generates a downlink radio signal based on the received signal and transmits the generated radio signal to the terminal 20.

Further, data transmitted from the terminal 20 to the core network 10D is first transmitted from the terminal 20 to the non-terrestrial object 10A by an uplink radio signal. The base station 10C of the non-terrestrial object 10A then transmits the received data to the core network 10D via the NTN gateway 10B.

In the following description, the "non-terrestrial object 10A", the "relay device mounted on the non-terrestrial object 10A", and the "base-station 10C mounted on the non-terrestrial object 10A" are collectively referred to as an "NTN apparatus 10N". That is, the NTN apparatus 10N may be the non-terrestrial object 10A including a relay device or a base station, may be a relay device mounted on the non-terrestrial object 10A, or may be the base station 10C mounted on the non-terrestrial object 10A. The "NTN apparatus 10N" may be referred to as a "communication apparatus".

Further, "NTN gateway 10B" and "NTN gateway 10B + base-station 10C" are collectively referred to as an "NTN terrestrial station 40". Also, a base station in a terrestrial network is referred to as a "terrestrial base station 10E". The NTN gateway 10B may be considered as an antenna included in the base station 10C, and the "NTN terrestrial station 40" may be referred to as a "base station 10C".

A link between the NTN terrestrial station 40 and the NTN apparatus 10N is called a feeder link, and a link between the terminal 20 and the NTN apparatus 10N is called a service link.

### (Duplex Scheme)

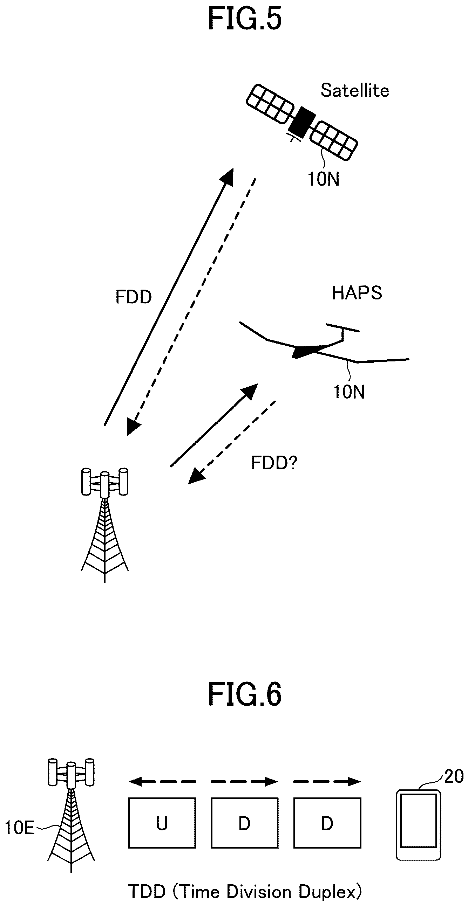

As described above, in the related art, FDD (Frequency Division Duplex) is adopted as a duplex scheme of the NTN system. This situation is shown in FIG. 5. In FIG. 5, a satellite and a HAPS are shown as examples of the NTN apparatus 10N.

In particular, when the NTN apparatus 10N is a satellite, communication with the ground becomes ultra-long distance communication, and FDD is adopted in consideration of propagation delay. When the NTN apparatus 10N is a HAPS, TDD may be used because the HAPS is lower in altitude than the satellite. However, even in the HAPS, in an altitude of 20km, when TDD is used, a guard time of about 67 µs or more is required, and thus FDD is used to suppress a transmission delay.

On the other hand, in a terrestrial network (here, NR is assumed), TDD (Frequency Division Duplex) is mainly used as a duplex scheme for bidirectional communication of uplink and downlink. FIG. 6 shows an example of TDD communication between the terminal 20 and the base station 10E. As shown in FIG. 6, uplink (U) and downlink (D) are separated in time. The reasons why TDD is employed for bidirectional communication in a terrestrial network include (1) frequency resources can be effectively utilized in TDD because there is no need to secure a pair of frequencies, (2) in FDD, if UL and DL frequencies are too far apart, completely different antennas need to be prepared for transmission and reception, (3) the use of dynamic TDD is assumed, and so on.

Although FDD has an advantage of low delay, it requires a large amount of frequency resources because it is necessary to secure a pair of uplink and downlink frequencies. Further, TDD has an advantage that frequency resources can be effectively used, but a delay required for switching between uplink and downlink increases.

As described above, the existing NTN system adopts FDD from the viewpoint of transmission delay. However, since frequency resources in the NTN system are limited, it is desirable to enjoy the merit of frequency resources in TDD.

### (Full Duplex (FD))

In order to solve the above problem, in the present embodiment, FD is used as a duplex scheme for communication between the NTN apparatus 10N and a terrestrial apparatus. FD may be referred to as a full-duplex scheme, or the like. For simplicity, communication from the NTN apparatus 10N to the terrestrial apparatus is referred to as downlink (DL), and communication from the terrestrial apparatus to the NTN apparatus 10N is referred to as uplink (UL). First, the characteristics of FD will be described.

The NTN apparatus 10N adopting FD can simultaneously transmit and receive signals on the same time-frequency resource. That is, the NTN apparatus 10N can perform communication using the same time and frequency resources in DL and UL.

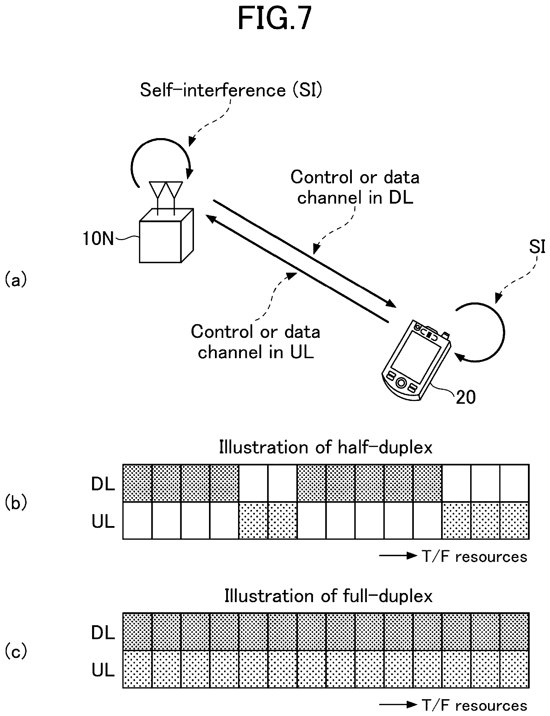

FIG. 7 (a), (c) illustrates a case where FD communication is performed between the NTN apparatus 10N and the terminal 20 which is an example of a terrestrial apparatus. As shown in FIG. 7 (a), (c), the terminal 20 transmits control information/data in UL, and receives control information/data in DL using the same resources as the time-frequency resources in UL. Similarly, the NTN apparatus 10N receives control information/date in UL and transmits control information/date in DL on the same time-frequency resources as in UL.

FIG. 7 (b) illustrates half-duplex communication (which may be referred to as time division duplex (TDD)) for comparison. As shown in FIG. 7(b), at a certain time (a certain slot), only DL communication or only UL communication is performed.

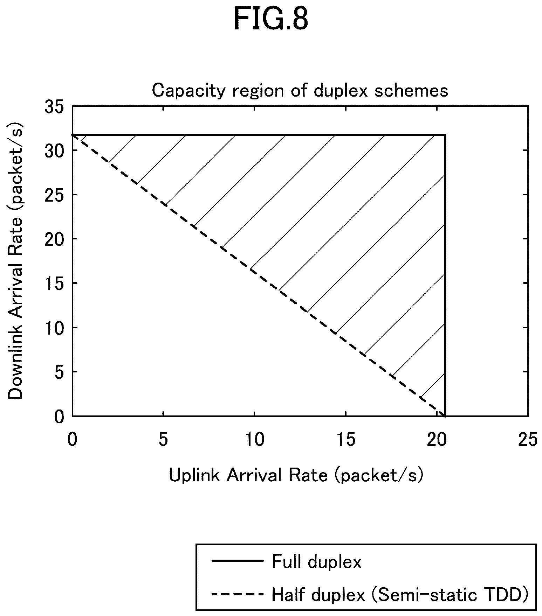

The communication using FD as described above can achieve higher spectral efficiency (theoretically, up to twice) and can reduce overhead (e.g., guard time/band). Furthermore, compared with TDD, it is possible to achieve low delay and improved coverage, and compared with FDD, it is possible to effectively utilize frequency resources since frequency pairs are not necessary. FIG. 8 is a diagram illustrating the improvement in transmission rate of FD compared to half-duplex communication (TDD). FD is particularly effective for improving UL of a TDD band.

FIG. 7(a) illustrates that self-interference (SI) in which a transmission signal interferes with a reception signal (desired signal) occurs in each of the NTN apparatus 10N and the terminal 20, but as will be described later, it is possible to cancel the self-interference by an existing technology.

### (Problem of Use of General FD)

In general, it is known that the improvement in spectral use efficiency by FD decreases in asymmetric traffic distribution with high inter-cell interferences (Reference 1: N.H. Mahmood, et al., "Full duplex communications in 5G small cells," Proc. IWCMC2017, June 2017).

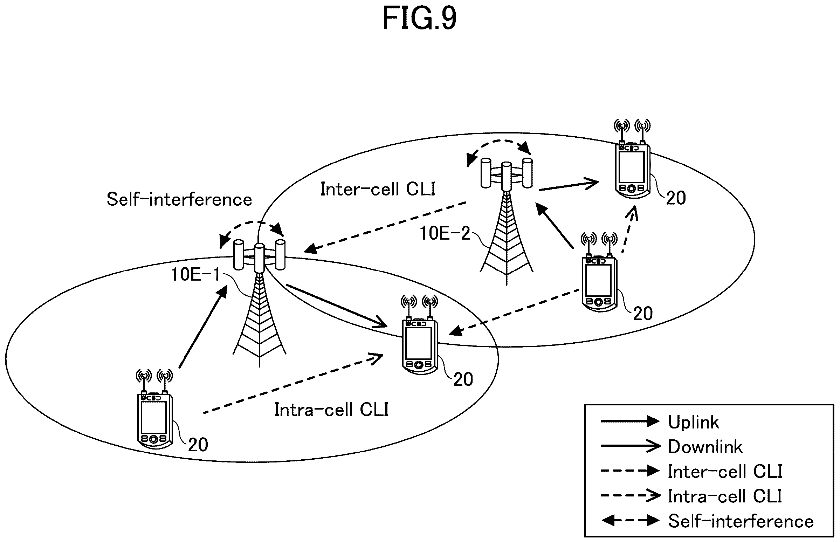

In addition, it is indicated that the performance is also degraded by self-interference and cross-link interference (CLI) in FD. FIG. 9 shows an example of self-interference and cross-link interference in a terrestrial network.

As described above, self-interference occurs in the NTN when FD is used. Also, cross-link interference may occur, for example, between the terrestrial network and the NTN.

### (Compatibility of FD in NTN)

The NTN apparatus 10N for realizing NTN includes a large antenna with a high gain compared to a base station on the ground. Therefore, the NTN apparatus 10N can form a beam with high directivity, and can suppress CLI by controlling the directivity. For example, when the same frequencies as the frequencies in the terrestrial NW are used in FD in the NTN, the NTN apparatus 10N can suppress CLI by directing directivity (beam) to an area that does not overlap with a cell in the terrestrial NW.

Furthermore, by using FD in NTN, it is possible to enjoy the merits of both FDD and TDD (that is, guard time is unnecessary and paired spectrum is unnecessary). Thus, since the frequency resource can be effectively used, for example, by using a frequency different from the frequency in the terrestrial network as the frequency in FD of the NTN, coexistence of the NTN and the terrestrial network is facilitated. In these respects, FD is compatible with NTN. In the present specification, the "frequency" may be referred to as a "frequency band".

### (System Configuration Example)

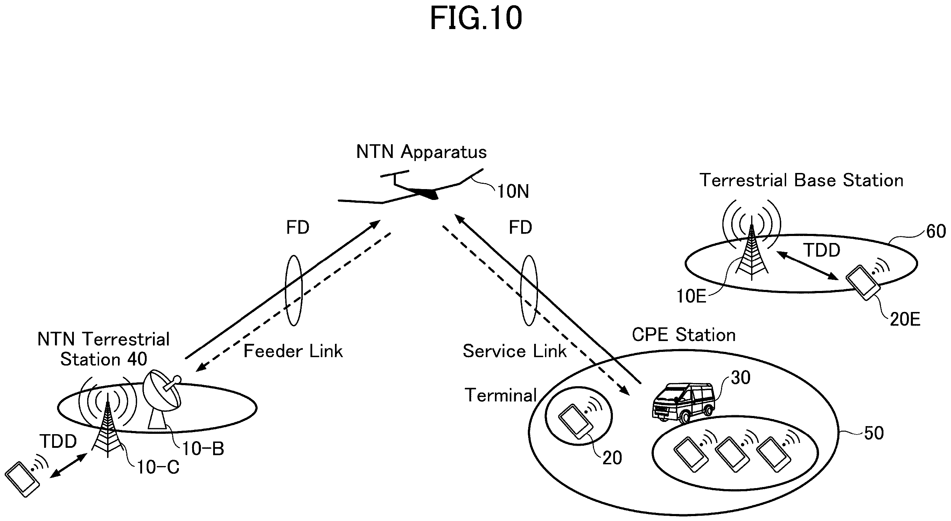

FIG. 10 shows an example of a system configuration including an NTN and a terrestrial NW in the present embodiment. In the example of FIG. 10, the NTN apparatus 10N may support multiple beams. By supporting multiple beams, it is possible to form an area on the ground with each of the plurality of beams. For example, the NTN apparatus 10N can use multiple beams to apply different beams to the feeder link and the service link and support them by the same frequencies.

Hereinafter, an area formed on the ground by a beam applied to the service link is referred to as an "NTN service area". An area formed on the ground by the terrestrial base station 10E is referred to as a "terrestrial service area". The "NTN service area" may be referred to as an "NTN cell", and the "terrestrial service area" may be referred to as a "terrestrial cell".

In the example of FIG. 10, an NTN service area 50 is formed by a beam in the service link. The terrestrial base station 10E forms a terrestrial service area 60.

There are also a terminal 20E which communicates with the terrestrial base station 10E in the terrestrial service area 60. In addition, a plurality of terminals 20 and a CPE station 30 exist in the NTN service area 50. Some of the terminals 20 are under the control of the CPE station 30. Note that the "CPE station 30" may be considered a type of a base station and the "CPE station 30" may be referred to as a base station. The "CPE station 30" may be considered as a kind of a terminal and may be referred to as a terminal.

The NTN terrestrial station 40, the NTN apparatus 10N, the CPE station 30, and the terminal 20 in the present embodiment each have a full duplex (FD) function and a self-interference canceller function. As shown in FIG. 10, by these functions, FD communication is performed between the NTN apparatus 10N and the NTN terrestrial station 40 in the feeder link, and FD communication is performed between the NTN apparatus 10N and the terminal 20 or the CPE station 30 in the service link.

Note that only one of the feeder link (FL) and the service link (SL) may use FD, and the other of the feeder link (FL) and the service link (SL) that does not use the FD may use, for example, FDD (or TDD). FIG. 10 shows an example in which FD is used for both the feeder link (FL) and the service link (SL).

As described above, the NTN apparatus 10N may be a base station-mounted type (Regenerative type) or a base station-non-mounted type (Transparent type).

The type of FD used in the NTN system according to the present embodiment may be bidirectional FD, NTN apparatus side FD, or both of them. This will be described in detail later.

The NTN terrestrial station 40 may be used exclusively for the NTN system, or may be used as a terrestrial base station in addition to use for the NTN system.

FIG. 10 shows that the base station 10C forming the NTN terrestrial station 40 is used for NTN and also used as a terrestrial base station, and communicates with the terminal 20 by TDD.

As described above, by adopting FD in the NTN system, it is not necessary to secure a frequency pair of UL and DL in the NTN system, and therefore, frequency resources can be saved as compared with FDD. Therefore, it is possible to make coexistence of the same frequency as that of the terrestrial NW system unnecessary. That is, in the example of FIG. 10, the frequency used for communication between the terrestrial base station 10E and the terminal 20E may be different from the frequency used for communication between the NTN apparatus 10N and the terrestrial apparatus.

### (Type of FD)

As described above, the type of FD used in the NTN system according to the present embodiment may be bidirectional FD, NTN apparatus side FD, or both of them.

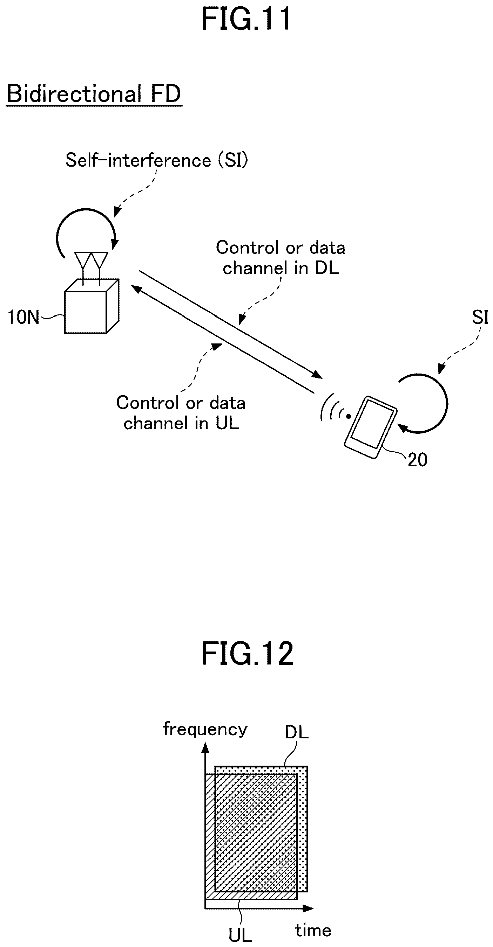

FIG. 11 shows an example of communication in the bidirectional FD. FIG. 11 shows an example of communication between the NTN apparatus 10N and the terminal 20. The terminal 20 is an example of a terrestrial apparatus, and the CPE station 30 or the NTN terrestrial station 40 may be used instead of the terminal 20.

In the configuration of FIG. 11, the terminal 20 transmits control information/data in UL, and receives control information/data in DL using the same resource as the time-frequency resource in UL. Similarly, the NTN apparatus 10 receives control information/data in UL and transmits control information/data in DL using the same resource as the time-frequency resource in UL.

FIG. 12 is a diagram illustrating DL/UL resources in bidirectional FD. The resources illustrated in FIG. 12 are common to the NTN apparatus 10N and the terminal 20.

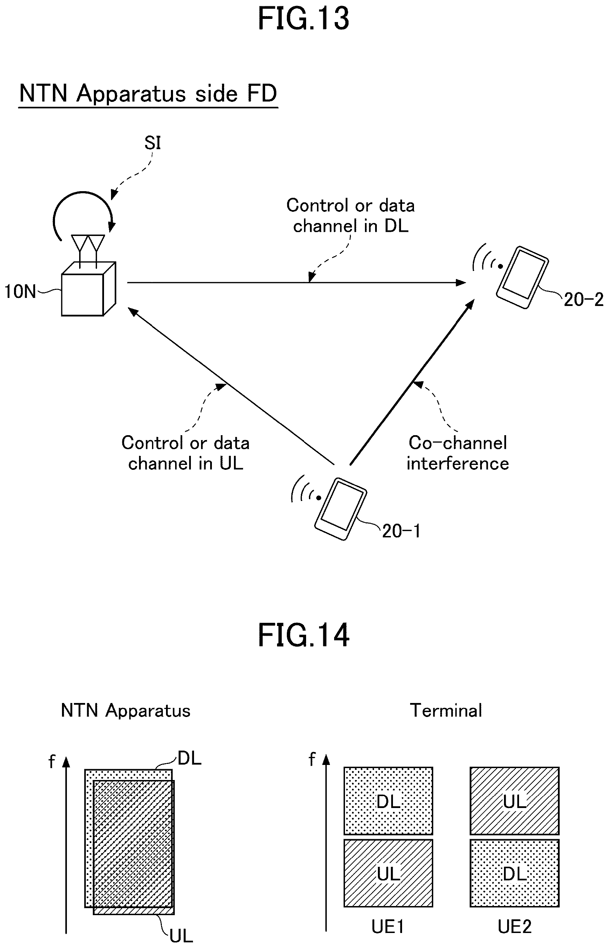

FIG. 13 shows an example of communication by the NTN apparatus side FD. FIG. 13 illustrates an example of communication between the NTN apparatus 10N and the terminals 20-1 and 20-2. The terminals 20-1 and 20-2 are examples of terrestrial apparatuses, and the CPE station 30 or the NTN terrestrial station 40 may be used instead of the terminals 20-1 and 20-2. Further, both of the two links shown in FIG. 13 may be feeder links, both of them may be service links, or one of them may be a feeder link and the other may be a service link.

In the configuration of FIG. 13, the terminal 20-1 performs UL communication and DL communication using different resources. The different resources may be resources different in frequency or resources different in time. Similarly, the terminal 20-2 performs UL communication and DL communication using different resources. On the other hand, the NTN apparatus 10N can perform, for example, UL reception from the terminal 20-1 and DL transmission to the terminal 20-2 by the same time-frequency resource.

FIG. 14 is a diagram illustrating an example of DL/UL resources in the NTN apparatus side FD. FIG. 14 illustrates resources of the NTN apparatus 10N and two terminals (UE1 and UE2) at a certain time.

### (Method of Suppressing Self-Interference)

As described above, each apparatus having an FD function has a self-interference cancellation function. Since the self-interference cancellation function itself is an existing technique, an outline thereof will be described here. Basically, each apparatus can perform self-interference cancellation by removing its own known transmission signal from a reception signal in which its own transmission signal is mixed.

As an example, the self-interference cancellation function can be classified by a domain in which self-interference cancellation is performed, and in the existing technology, there are a self-interference canceller that performs self-interference cancellation in a propagation domain, a self-interference canceller that performs self-interference cancellation in an analog domain, and a self-interference canceller that performs self-interference cancellation in a digital domain, and any of them may be used. Also, combinations of two or three of these three may be used.

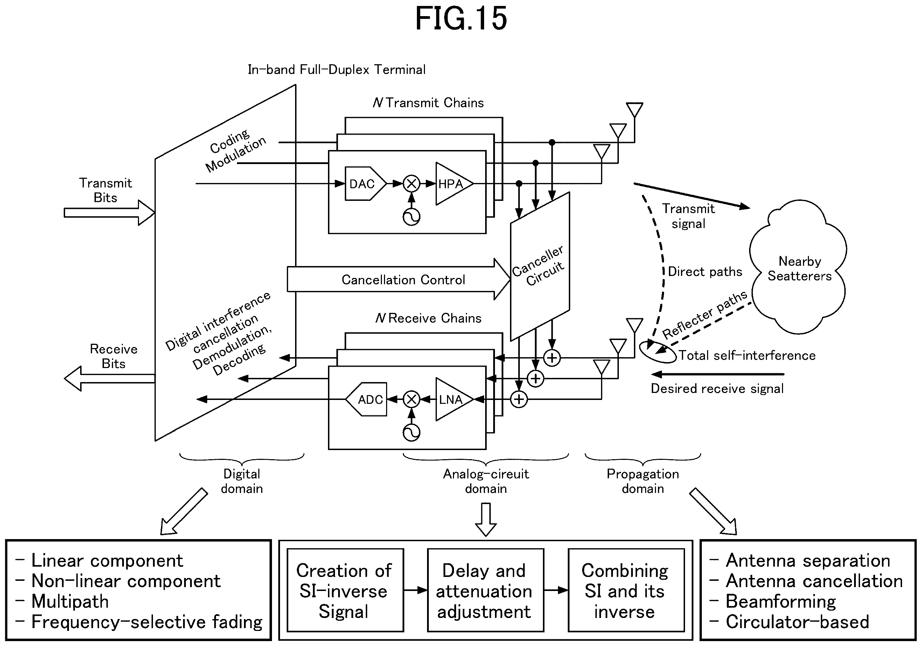

FIG. 15 shows a configuration of a self-interference canceller disclosed in Reference Document 2 (A. Sabharwal, P. Schniter, D. Guo, et.al.. "In-Band Full-Duplex Wireless: Challenges and Opportunities," IEEE Journal on Selected Areas in Communications, vol. 32, no. 9, Sept. 2014) as an example of the self-interference canceller. For example, the self-interference canceller disclosed in Reference Document 2 may be provided in each apparatus having the FD function.

### (Power Suppression Method)

In the present embodiment, the NTN terrestrial station 40, the NTN apparatus 10N, the CPE station 30, and the terminal 20 all include an FD function. In FD, simultaneous transmission and reception of UL and DL are possible, and thus power consumption increases. Therefore, each apparatus having the FD function may have a power suppression function. The power suppression function itself in the FD is an existing technique.

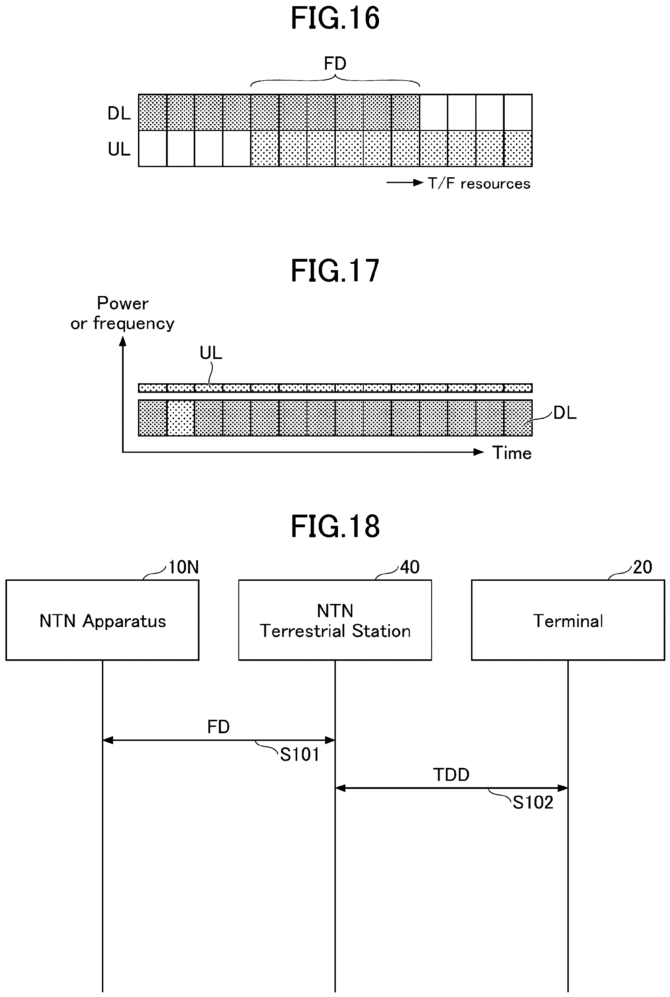

For example, each apparatus may have a function of Partial FD. For example, it is assumed that the terminal 20 has a function of Partial FD. In this case, as illustrated in FIG. 16, the terminal 20 partially executes FD. For example, FD is performed only for a part of the unit time length T. The time at which FD is performed may be configured in the terminal 20 by the base station 10C.

Further, asymmetric resource allocation via FD disclosed in Reference Document 3 (M. Sawahashi, et al., "Physical channel multiplexing using symbol repetition in every subframe for full duplex," IEEE PIMRC 2018, Dec. 2018) may be applied. FIG. 17 shows an example of asymmetric resource allocation. In this example, more resources are allocated to DL, which is a busy link, than to UL. This can reduce power consumption.

### (Example in which NTN Terrestrial Station Operates as Terrestrial Base Station)

An operation example in a case where the NTN terrestrial station 40 operates for NTN and also operates as a base station of the terrestrial NW will be described with reference to a sequence diagram of FIG. 18. The NTN terrestrial station 40 here includes the NTN gateway 10B and the base station 10C. The NTN terrestrial station 40 may include only the base station 10C. When the NTN terrestrial station 40 includes the NTN gateway 10B and the base station 10C, the NTN gateway 10B may be a communication unit (e.g., an antenna) included in the base station 10C. The NTN terrestrial station 40 may also be referred to as a "base station".

In FIG. 18, the terminal 20 is located in a cell of the NTN terrestrial station 40 (operating as a gNB) by, for example, an NR scheme. On the other hand, the NTN terrestrial station 40 also performs communication with the NTN apparatus 10N in NTN.

That is, in S101 of FIG. 18, communication by FD is performed between the NTN terrestrial station 40 and the NTN apparatus 10N. In S102, TDD communication is performed between the NTN terrestrial station 40 and the terminal 20. The order of S101 and S102 may be reversed, or S101 and S102 may be performed at the same time. The communication in S102 may be FDD.

The NTN terrestrial station 40 (base station) may include an antenna for operating as a terrestrial base station and an antenna for performing NTN communication separately, or may perform both communication as a terrestrial base station and NTN communication with one antenna.

In addition, different frequencies are used for FD communication and TDD communication in the present embodiment illustrated in FIG. 18. This allows both systems to be compatible without interference. Note that the same frequency may be used for FD communication and TDD communication in the present embodiment illustrated in FIG. 18. In this case, interference cancellation can be performed using an existing interference cancellation technique.

### (Operation Example of Determining FD Type by Capability Information)

As described above, communication between the NTN apparatus 10N and the terrestrial apparatus may be bidirectional FD or NTN apparatus side FD. Further, for example, depending on the capability of the terminal 20 that communicates with the NTN apparatus 10N, it may be determined whether to perform communication with the terminal 20 using bidirectional FD or NTN apparatus side FD.

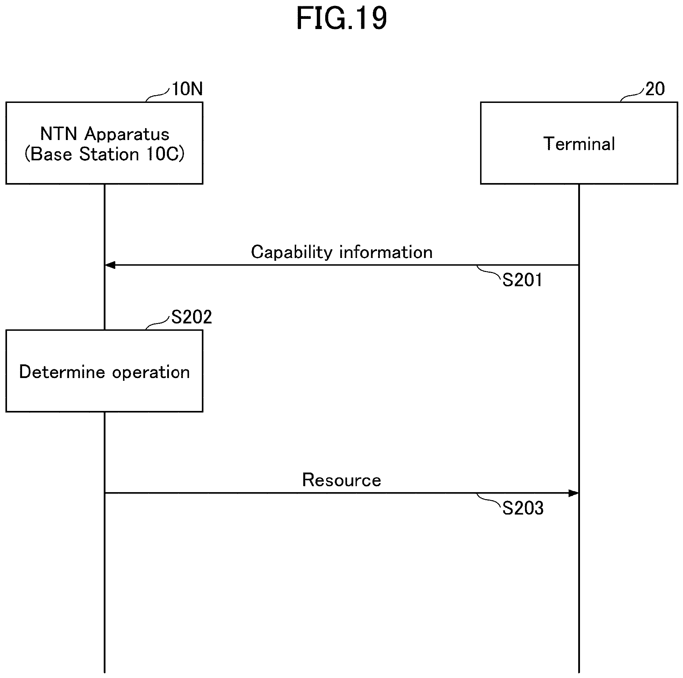

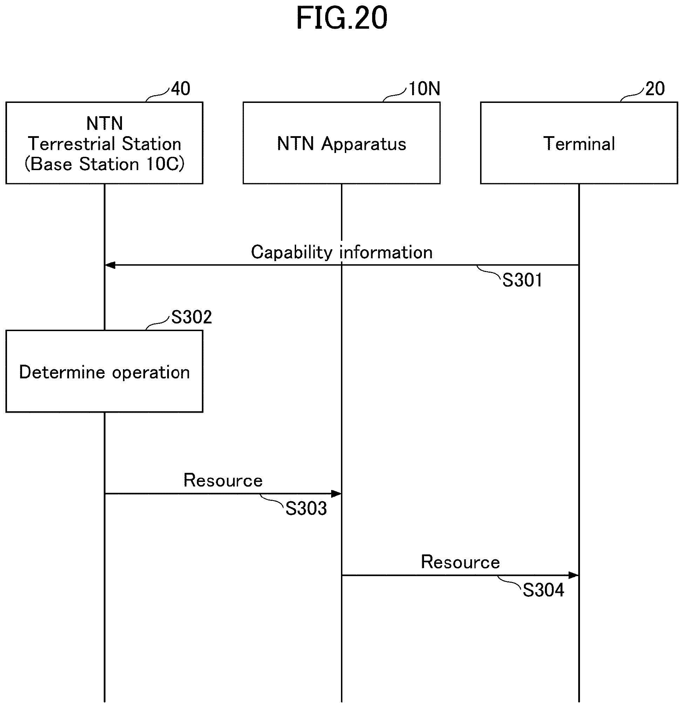

An operation example will be described with reference to sequences of FIGs. 19 and 20. FIG. 19 is a sequence in the case where the base station 10N is included in the NTN apparatus 10N. In S201, the terminal 20 transmits, to the NTN apparatus 10N, capability information indicating whether or not FD operation is possible (that is, whether or not transmission and reception can be simultaneously performed with the same time-frequency resource).

In S202, the NTN apparatus 10N determines whether or not to cause the terminal 20 to perform FD operation based on the capability information of the terminal 20. Basically, the NTN apparatus 10N determines to cause the terminal 20 to perform FD operation if the terminal 20 has the FD operation capability, and determines not to cause the terminal 20 to perform FD operation if the terminal 20 does not have the FD operation capability.

When the NTN apparatus 10N determines to cause the terminal 20 to perform FD operation, the NTN apparatus 10N configures a resource (which may be a frequency resource or a time-frequency resource) used by the terminal 20 to the terminal 20 by configuration information. The resource is a resource used by the terminal 20 for both transmission and reception. The terminal 20 performs communication using the configured resource.

When it is determined that the terminal 20 is not allowed to perform FD operation, in the S203, the NTN apparatus 10N configures a resource (which may be a frequency resource or a time-frequency resource) used by the terminal 20 to the terminal 20 by configuration information. The resource includes an UL resource and a DL resource. The UL resource and the DL resource are different resources that do not overlap.

FIG. 20 shows a sequence in the case where the base station 10C is included in the NTN terrestrial station 40. In S301, the terminal 20 transmits capability information indicating whether or not FD operation is possible (that is, whether or not transmission and reception can be performed simultaneously using the same time-frequency resource) to the NTN terrestrial station 40 via the NTN apparatus 10N.

In S302, the NTN terrestrial station 40 (base station 10C) determines whether or not to cause the terminal 20 to perform FD operation based on the capability information of the terminal 20. Basically, the NTN terrestrial station 40 determines to cause the terminal 20 to perform FD operation if the terminal 20 has 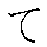 an FD operation capability, and determines not to cause the terminal 20 to perform the FD operation if the terminal 20 does not have the FD operation capability.

When the NTN terrestrial station 40 (base station 10C) determines to cause the terminal 20 to perform FD operation, the NTN terrestrial station 40 (base station 10C) configures a resource (which may be a frequency resource or a time-frequency resource) used by the terminal 20 and the NTN apparatus 10N to the NTN apparatus 10N in S303 using configuration information. The resource is a resource used by the terminal 20 and the NTN apparatus 10N for both transmission and reception. In S304, the NTN apparatus 10N configures the resource to the terminal 20.

When it is determined that the terminal 20 is not allowed to perform FD operation, in S303, the NTN apparatus 10N configures a resource (which may be a frequency resource or a time-frequency resource) used by the terminal 20 and the NTN apparatus 10N to the NTN apparatus 10N. The resource includes an UL resource and a DL resource used between the terminal 20 and the NTN apparatus 10N. The UL resource and the DL resource are different resources that do not overlap. In S304, the NTN apparatus 10N configures the resource to the terminal 20.

### (Apparatus Configuration)

Next, functional configuration examples of the NTN apparatus 10N, the terrestrial base station 10C, and the terminal 20 that execute the processes and operations described above will be described. Each of the NTN apparatus 10N, the terrestrial base station 10C, and the terminal 20 includes functions to perform all of the operations described above. However, each of the NTN apparatus 10N, the terrestrial base station 10C, and the terminal 20 may have only a function for performing any one of all the operations described above.

### <NTN apparatus 10N>

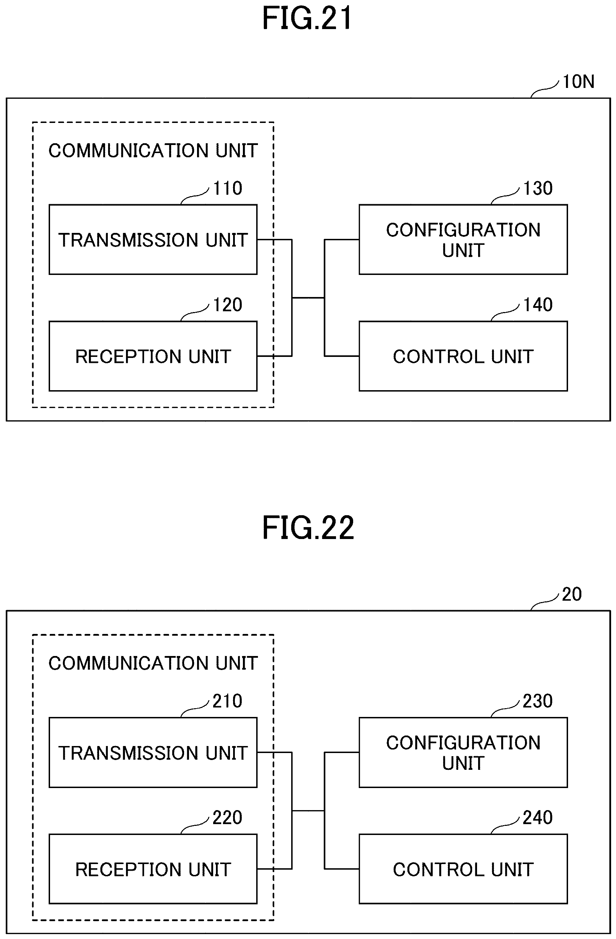

FIG. 21 is a diagram illustrating an example of a functional configuration of the NTN apparatus 10N. The NTN apparatus 10N illustrated in FIG. 21 is assumed to be a relay device mounted on a non-terrestrial object, a base station mounted on a non-terrestrial object, or a functional unit related to communication in a non-terrestrial object. As illustrated in FIG. 21, the NTN apparatus 10N includes a transmission unit 110, a reception unit 120, a configuration unit 130, and a control unit 140. The functional configuration shown in FIG. 21 is merely an example. The functional sections and the names of the functional units may be any as long as the operations according to the embodiment of the present invention can be executed. The "transmission unit 110 + reception unit 120" may be referred to as a communication unit. The communication unit can communicate with an apparatus on the ground by FD.

The transmission unit 110 creates a transmission signal from transmission data and transmits the transmission signal by radio. The reception unit 120 receives various signals by radio and acquires a signal of a higher layer from the received signal of the physical layer. In addition, both the transmission unit 110 and the reception unit 120 can control a direction /size of a beam in response to a command from the control unit 140.

The configuration unit 130 stores various kinds of configuration information received from another apparatus by the reception unit 120 in the storage device, and reads the configuration information from the storage device as necessary. The configuration unit 130 also stores configuration information configured in advance. The control unit 140 performs control of the entire NTN apparatus 10N. The control unit 140 also performs control for self-interference cancellation, beam control, and power suppression operation. The transmission unit 110 and the reception unit 120 may be referred to as a transmitter and a receiver, respectively. The control unit 140 may be referred to as a processor or a controller.

### <Terminal 20>

FIG. 22 is a diagram illustrating an example of a functional configuration of the terminal 20. As illustrated in FIG. 22, the terminal 20 includes a transmission unit 210, a reception unit 220, a configuration unit 230, and a control unit 240. The functional configuration shown in FIG. 22 is merely an example. The functional sections and the names of the functional units may be any as long as the operations according to the embodiment of the present invention can be executed. The transmission unit 210 and the reception unit 220 may be collectively referred to as a communication unit. The communication unit can communicate with the NTN apparatus 10N by FD.

The transmission unit 210 creates a transmission signal from transmission data and transmits the transmission signal by radio. The reception unit 220 receives various signals by radio and acquires a signal of a higher layer from the received signal of the physical layer. Also, the reception unit 220 has functions to receive, for example, NR-PSS, NR-SSS, NR-PBCH, DL/UL/SL control signals, DCI in PDCCH, and date in PDSCH, which are transmitted from the base station 10C. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to another terminal 20 as D2D communication, and the reception unit 120 may receive PSCCH, PSSCH, PSDCH, PSBCH, or the like from another terminal 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information configured in advance.

The control unit 240 controls the terminal 20. The control unit 240 also performs control for self-interference cancellation, beam control, and power suppression operation. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

### <Base Station 10C>

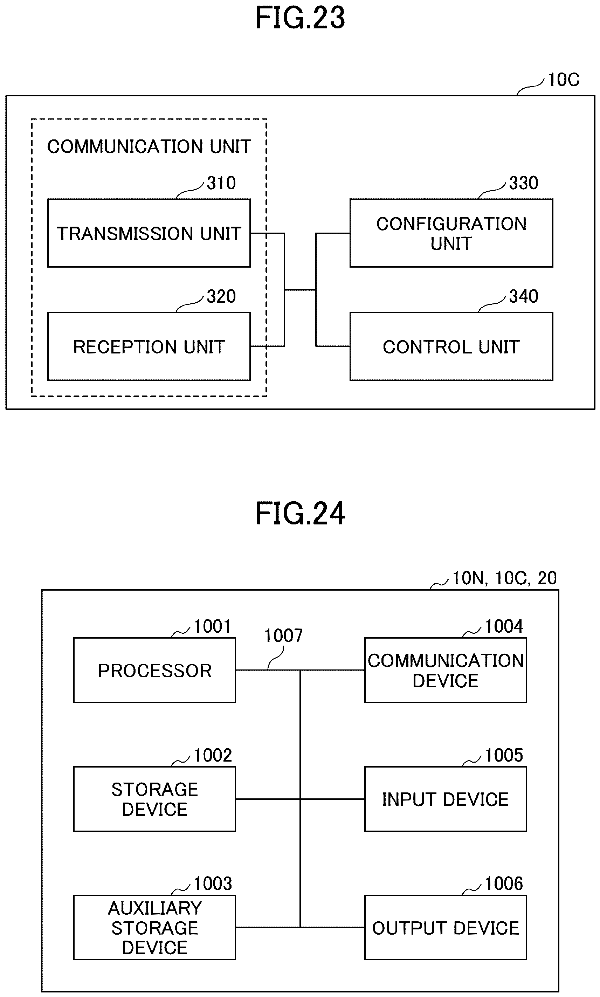

FIG. 23 is a diagram showing an example of a functional configuration of the terrestrial base station 10C. As illustrated in FIG. 23, the base station 10C includes a transmission unit 310, a reception unit 320, a configuration unit 330, and a control unit 340. The functional configuration shown in FIG. 23 is merely an example. The functional sections and the names of the functional units may be any as long as the operations according to the embodiment of the present invention can be executed. The "transmission unit 310 + reception unit 320" may be referred to as a communication unit. The communication unit can communicate with the NTN apparatus 10N by FD and can communicate with the terminal 20 of the terrestrial NW under the control of the base station 10C by TDD or FDD.

The transmission unit 310 includes a function of generating a signal to be transmitted and transmitting the signal by radio. The reception unit 320 also includes a function of receiving various signals transmitted from other apparatuses and acquiring, for example, information of a higher layer from the received signals. The transmission unit 310 has a function of transmitting NR-PSS, NR-SSS, NR-PBCH, DL/UL control signals, DL data, and the like to the terminal 20.

Both the transmission unit 310 and the reception unit 320 can adjust (control) the size of the service area in response to a command from the control unit 340. Further, both the transmission unit 310 and the reception unit 320 include a function of communicating with the core NW.

The configuration unit 330 stores configuration information configured in advance and various kinds of configuration information to be transmitted to the terminal 20 or the NTN apparatus 10N in the storage device, and reads the configuration information from the storage device as necessary. The control unit 340 controls the entire base station 10C. The control unit 340 also performs control for self-interference cancellation, beam control, and power suppression operation. The control unit 340 adjusts the size of the service area. The transmission unit 310 and the reception unit 320 may be referred to as a transmitter and a receiver, respectively. The control unit 340 may be referred to as a processor or a controller.

### <Supplementary Notes>

The present application discloses at least a communication apparatus, a terminal, a base station, and a communication method described in the following respective items.

### (Item 1)

A communication apparatus including:
a communication unit configured to perform communication with a terrestrial apparatus by FD (Full Duplex) in a service link or a feeder link of a non-terrestrial network; and
a control unit configured to remove a self-interference that is an interference to a reception signal by a transmission signal.

### (Item 2)

The communication apparatus as described in item 1,
wherein the communication unit transmits, to a terminal, configuration information of a resource for use for both uplink communication and downlink communication, or configuration information of resources that includes a resource for uplink communication and a resource for downlink communication as different resources.

### (Item 3)

A base station including:
a communication unit configured to perform communication with a communication apparatus on a non-terrestrial network by FD (Full Duplex) and to perform communication with a terminal by TDD (Time Division Duplex); and
a control unit configured to remove a self-interference that is an interference to a reception signal by a transmission signal.

### (Item 4)

A terminal including:
a communication unit configured to perform communication with a communication apparatus on the sky by FD (Full Duplex) in a service link of a non-terrestrial network; and
a control unit configured to remove a self-interference that is an interference to a reception signal by a transmission signal.

### (Item 5)

A communication method executed by a communication apparatus, the communication method including:
performing communication with a terrestrial apparatus by FD (Full Duplex) in a service link or a feeder link of a non-terrestrial network; and
removing a self-interference that is an interference to a reception signal by a transmission signal.

Any of the above configurations provides a technique that enables the NTN system to enjoy both the advantage of FDD and the advantage of TDD. According to item 2, even a terminal that does not have the FD function can communicate with an aerial communication apparatus that has the FD function.

### (Hardware Configuration)

The block diagrams (FIGs. 21-23) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the NTN apparatus 10N, the terminal 20, the base station 10C and the like in one embodiment of this disclosure may function as a computer for performing the processing of a radio communication method of this disclosure. FIG. 24 is a diagram illustrating an example of a hardware configuration of the NTN apparatus 10N, the terminal 20, and the base station 10C according to one embodiment of this disclosure. The NTN apparatus 10N, the terminal 20, and the base station 10C described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the NTN apparatus 10N, the terminal 20, and the base station 10C may be configured to include one or a plurality of apparatuses illustrated in the drawings, or may be configured not to include a part of the apparatuses.

Each function of the NTN apparatus 10N, the terminal 20, and the base station 10C is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, each control unit shown in FIGs. 1-23 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of full duplex (FD), frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the NTN apparatus 10N, the terminal 20, and the base station 10C may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

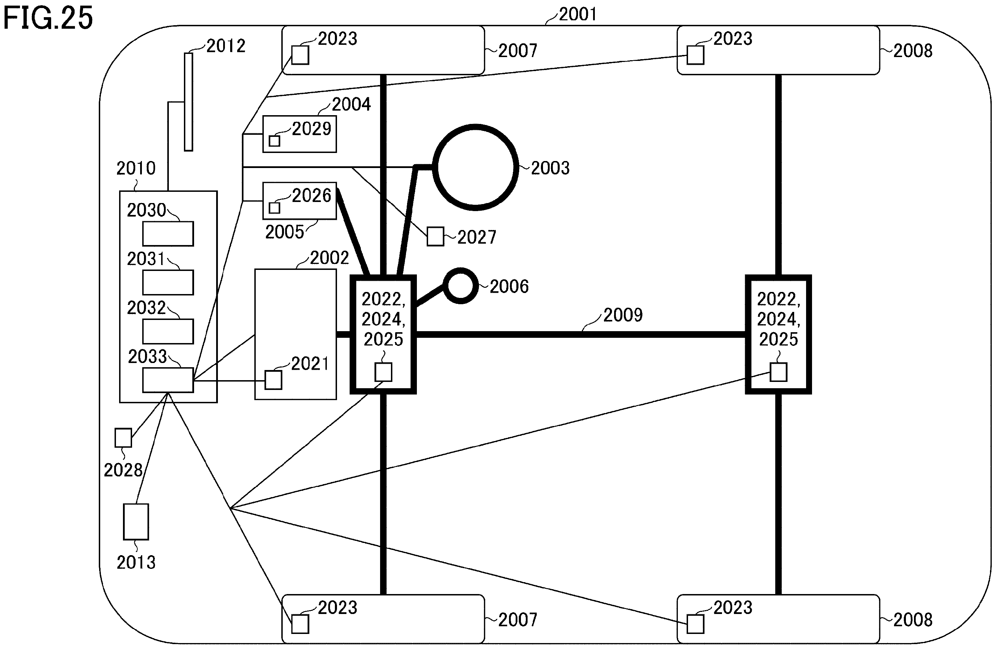

FIG. 25 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the NTN apparatus 10N, the functions of the terminal 20, and the functions of the base station 10C may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, the base station 10C, the terminal 20, or the NTN apparatus 10N or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the NTN apparatus 10N, the terminal 20, and the base station 10C have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG (x is an integer, a decimal)), future radio access (FRA), new radio (NR), New radio access (NX), Future generation radio access(FX)W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated and defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the NTN apparatus, the terminal 20, or the base station 10C may be performed by an upper node, in accordance with a case. In a network provided with one or a plurality of network nodes including the base station 10C, it is obvious that various operations that are performed in order for communication with respect to the terminal 20 can be performed by at least one of the base station 10C and network nodes other than the base station 10C (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining " may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

This patent application claims priority based on Japanese Patent Application No. 2022-045112 filed on March 22, 2022, and the entire contents of Japanese Patent Application No. 2022-045112 are incorporated herein by reference.

### Description of Symbols

10A non-terrestrial object
10B gateway
10C base station
10D CN
10E terrestrial base station
10N NTN apparatus
110 transmission unit
120 reception unit
130 configuration unit
140 control unit
210 transmission unit
220 reception unit
230 configuration unit
240 control unit
310 transmission unit
320 reception unit
330 configuration unit
340 control unit
30 CPE station
40 NTN terrestrial station
50 NTN service area
60 terrestrial service area
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A communication apparatus comprising:
a communication unit configured to perform communication with a terrestrial apparatus by FD (Full Duplex) in a service link or a feeder link of a non-terrestrial network; and
a control unit configured to remove a self-interference that is an interference to a reception signal by a transmission signal.

2. The communication apparatus as claimed in claim 1,
wherein the communication unit transmits, to a terminal, configuration information of a resource for use for both uplink communication and downlink communication, or configuration information of resources that includes a resource for uplink communication and a resource for downlink communication as different resources.

3. A base station comprising:
a communication unit configured to perform communication with a communication apparatus on a non-terrestrial network by FD (Full Duplex) and to perform communication with a terminal by TDD (Time Division Duplex); and
a control unit configured to remove a self-interference that is an interference to a reception signal by a transmission signal.

4. A terminal comprising:
a communication unit configured to perform communication with a communication apparatus in the sky by FD (Full Duplex) in a service link of a non-terrestrial network; and
a control unit configured to remove a self-interference that is an interference to a reception signal by a transmission signal.

5. A communication method executed by a communication apparatus, the communication method comprising:
performing communication with a terrestrial apparatus by FD (Full Duplex) in a service link or a feeder link of a non-terrestrial network; and
removing a self-interference that is an interference to a reception signal by a transmission signal.
